Europäisches Patentamt

European Patent Office

Office européen des brevets

(19)

(11) Numéro de publication : **0 421 855 B1**

(12) **FASCICULE DE BREVET EUROPEEN**

(45) Date de publication du fascicule du brevet :
**10.08.94 Bulletin 94/32**

(51) Int. Cl.⁵ : **G02B 27/12,** G02B 5/32,
H04N 3/12

(21) Numéro de dépôt : **90402705.9**

(22) Date de dépôt : **01.10.90**

(54) **Système optique de reproduction d'images vidéo en couleurs.**

(30) Priorité : **03.10.89 FR 8912888**

(43) Date de publication de la demande :
**10.04.91 Bulletin 91/15**

(45) Mention de la délivrance du brevet :
**10.08.94 Bulletin 94/32**

(84) Etats contractants désignés :
**AT BE CH DE DK ES FR GB GR IT LI LU NL SE**

(56) Documents cités :
**WO-A-89/02612
DE-A- 1 772 583
DE-C- 887 520
US-A- 3 622 219
US-A- 3 716 658
US-A- 4 082 415
US-A- 4 447 111
US-A- 4 722 037**

(73) Titulaire : **THOMSON-CSF
173, Boulevard Haussmann
F-75008 Paris (FR)**

(72) Inventeur : **Lehureau, Jean-Claude
THOMSON-CSF
SCPI
Cédex 67
F-92045 Paris la Défense (FR)**
Inventeur : **Huignard, Jean-Pierre
THOMSON-CSF
SCPI
Cédex 67
F-92045 Paris la Défense (FR)**

(74) Mandataire : **Ruellan-Lemonnier, Brigitte et al
THOMSON-CSF,
SCPI,
B.P. 329,
50, rue Jean-Pierre Timbaud
F-92402 Courbevoie Cédex (FR)**

## Description

La présente invention concerne un système optique de reproduction d'images vidéo en couleurs. Elle concerne plus particulièrement un système optique du type comportant une source d'éclairement, un modulateur électro-optique couleur constitué de pixels associés respectivement aux couleurs rouge-verte-bleue et des moyens optiques de collimation pour éclairer la totalité du modulateur.

De tels systèmes optiques peuvent être utilisés soit dans un apparell de projection, sur un écran de grande dimension, d'images vidéo en couleurs appelé aussi vidéoprojecteur, soit en vision directe. Dans le premier cas, le système optique sera associé de manière connue à une lentille de champs, un objectif et un écran. Dans le second cas, il comportera, de préférence, un diffuseur placé en aval du modulateur électro-optique.

Les systèmes optiques de ce type actuellement utilisés, notamment les vidéoprojecteurs, ont pour principal inconvénient que l'image obtenue est peu lumineuse. En effet, dans le cas d'un vidéoprojecteur, le flux lumineux atteignant l'écran est d'au plus 150 lumens pour une source de 1 200 lumens. Cette faible luminance est due notamment à la polarisation de l'onde lumineuse éclairant le modulateur et aussi au filtrage des couleurs qui diminuent la luminance d'environ 1/3.

Pour remédier à cet inconvénient, on a proposé, notamment dans les vidéoprojecteurs, de décomposer les composantes primaires de la source lumineuse par des miroirs dichroïques. Toutefois, cette technique nécessite l'emploi de quatre miroirs dichroïques et de trois modulateurs électro-optiques qui modulent chacun l'une des composantes primaires. Ceci entraîne des problèmes d'ajustement mécanique. De plus, l'apparell obtenu présente une distance focale relativement grande.

Pour remédier à ces inconvénients, on a proposé dans la demande de brevet WO-A-89/02612, un système optique présentant une meilleure luminance, en associant à chaque pixel un collecteur de lumière spécifique de la couleur de ce pixel qui augmente le flux traversant ce pixel d'un facteur 3.

Ce système optique de reproduction d'images vidéo en couleurs comporte une source d'éclairement, un modulateur électro-optique constitué de pixels associés respectivement aux couleurs rouge, verte, bleue et des moyens optiques de collimation pour éclairer la totalité du modulateur, avec de plus un ensemble de lentilles holographiques, sélectives en longueurs d'onde, permettant de focaliser la lumière de chaque composante rouge, verte et bleue sur les pixels associés du modulateur.

La présente invention a pur but de proposer un nouveau mode de réalisation d'un système tel que décrit ci-dessus.

Ce nouveau mode de réalisation est caractérisé en ce que l'ensemble des lentilles holographiques est constitué de trois lentilles holographiques superposées à une seule couleur, chaque lentille étant réalisée en au moins deux réseaux holographiques. Chaque réseau holographique est enregistré par interférence de deux faisceaux lumineux dont la bissectrice est l'orientation des strates à enregistrer et dont l'angle d'intersection est choisi de manière à enregistrer le pas désiré.

Selon une caractéristique de la présente invention, le modulateur est constitué par un écran à cristaux liquides. Toutefois, d'autres modulateurs électro-optiques pourraient être envisagés notamment des cellules ferro-électriques avec effet optique.

Selon une caractéristique supplémentaire, le système optique comporte de plus un diffuseur positionné en aval du modulateur électro-optique. Dans ce cas, le système est utilisé en vision directe.

Selon une autre application, le système optique peut être associé à une lentille de champ, un objectif et un écran. Dans ce cas, le système optique est utilisé dans un dispositif de projection d'images.

Selon une caractéristique de ce dispositif, la distance focale fo des lentilles holographiques est égale à : fo = d/ $\alpha$ où d représente la taille d'un pixel et $\alpha$ l'angle de divergence du faisceau collimaté. Cette distance focale non arbitraire est importante pour éviter toute perte de lumière. En effet, une distance focale plus longue se traduit par une perte de lumière qui se focalise en une tache plus grande que la taille d du pixel de couleur correspondante de l'écran à cristaux liquides, tandis qu'une distance focale plus courte entraîne une divergence du faisceau émergeant trop grande pour être collectée par l'objectif de projection. Si les pixels de différentes couleurs sont alignés dans une direction, ce choix de fo se traduit par une augmentation d'un facteur 3 de l'angle de divergence du faisceau émergeant de la cellule.

D'autres caractéristiques et avantages de la présente invention apparaitront à la lecture de la description de divers modes de réalisation faite ci-après avec référence aux dessins ci-annexés dans lesquels :

- la figure 1 est une vue schématique d'un dispositif de projection d'images comportant un système optique conforme à la présente invention;
- la figure 2 est un schéma d'un mode de réalisation d'un hologramme de type connu;
- les figures 3, 4 et 5 sont des schémas d'un mode de réalisation de lentilles holographiques conformément à la présente invention, et
- la figure 6 est une vue schématique en coupe d'un système optique conforme à la présente invention utilisé en vision directe.

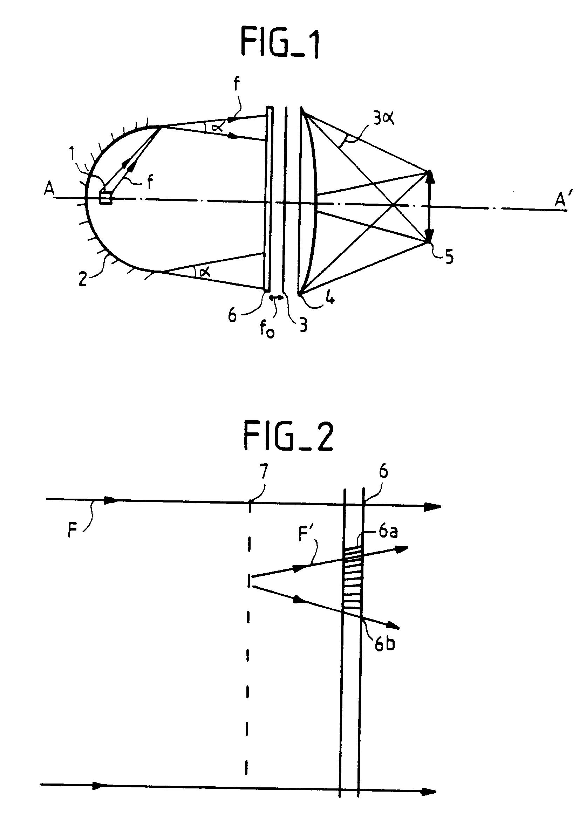

Comme représenté sur la figure 1, le dispositif de projection d'images vidéo en couleurs auquel s'applique la présente invention est constitué principalement d'une source lumineuse 1 qui, associée avec un réflecteur 2, émet un faisceau d'éclairement f faiblement collimaté de manière à éclairer uniformément la surface entière d'un modulatuer électro-optique 3. Ce modulateur électro-optique 3 est, dans le mode de réalisation représenté, constitué par un écran à cristaux liquides présentant des triplets rouge, vert, bleu. Cet écran est bien connu de l'homme de l'art. Comme représenté sur la figure 1, cet écran 3 est associé à une lentille de champ 4 qui, dans le mode de réalisation représenté, est placée au-delà de l'écran 3 à cristaux liquides par rapport à la source 1. De manière connue, les éléments ci-dessus sont associés à un objectif 5 qui projette sur un écran non représenté l'image inscrite sur l'écran à cristaux liquides 3. D'autre part, entre la source 1 et le modulateur électro-optique 3, l'on a positionné un ensemble de lentilles holographiques 6 dont le rôle est de focaliser la lumière sur le pixel de couleurs correspondantes du modulateur électro-optique. L'ensemble des éléments ci-dessus est centré le long d'un axe AA'.

Comme représenté sur la figure 1, le faisceau collimaté issu de la source 1 présente un angle de divergence $\alpha$. Si le modulateur électro-optique 3 est constitué par un écran à cristaux liquides présentant des pixels de taille d, alors l'ensemble des lentilles holographiques 6 doit être positionné à une distance focale fo du modulateur électro-optique 3 choisie de manière telle que : fo = d/ $\alpha$ où fo représente la focale de l'ensemble des lentilles holographiques. En effet, une distance focale fo plus importante se traduit par une perte de lumière qui se focalise en une tache plus grande que la taille d du pixel de couleurs correspondantes. Une distance focale plus courte entraîne une divergence du faisceau émergeant trop grande pour être collectée par l'objectif de projection. Comme représenté sur la figure 1, lorsque les pixels de différentes couleurs sont alignés, cette valeur de fo se traduit par une augmentation d'un facteur 3 de l'angle de divergence du faisceau émergeant de la cellule qui vaut donc 3$\alpha$.

On décrira maintenant, avec référence aux figures 2 à 5, différents modes de réalisation de l'ensemble des lentilles holographiques. Les lentilles holographiques doivent être sélectives en longueurs d'ondes pour permettre la focalisation de la lumière de chaque composante rouge, verte ou bleue sur les pixels associés du modulateur. Les lentilles holographiques seront donc réalisées dans un matériau répondant à l'éclairement par une variation d'indice tel que la gélatine bi-chromatée où l'éclairement modifie la prise d'eau de la gélatine ou des copolymères d'esthers méthacryliques se liant à des cétones aromatiques sous l'effet d'irradiation.

Dans ce milieu, la variation d'indices peut atteindre quelques pourcents. En conséquence, quelques dizaines de microns suffisent pour obtenir une efficacité de 100%. Dans une épaisseur plus importante, on peut donc superposer plusieurs hologrammes.

Selon un premier mode de réalisation, illustré principalement par la figure 2, l'ensemble des lentilles holographiques est donc constitué par trois hologrammes superposés réalisés dans une couche épaisse d'un matériau tel que mentionné ci-dessus qui a été sensibilisé aux composantes primaires rouge, verte ou bleue.

Dans ce cas, chaque hologramme est enregistré en utilisant la technique d'enregistrement d'un hologramme de Gabor. Comme représenté sur la figure 2, un faisceau f parallèle de lumière monochromatique éclaire un masque 7 identique à celui des filtres colorés de l'écran à cristaux liquides 3. On obtient un battement des ondes lumineuses du faisceau f avec les ondes lumineuses du faisceau diffractées f' permettant d'obtenir dans la couche 6 du matériau photosensible les raies représentées par 6a et 6b sur la figure 2.

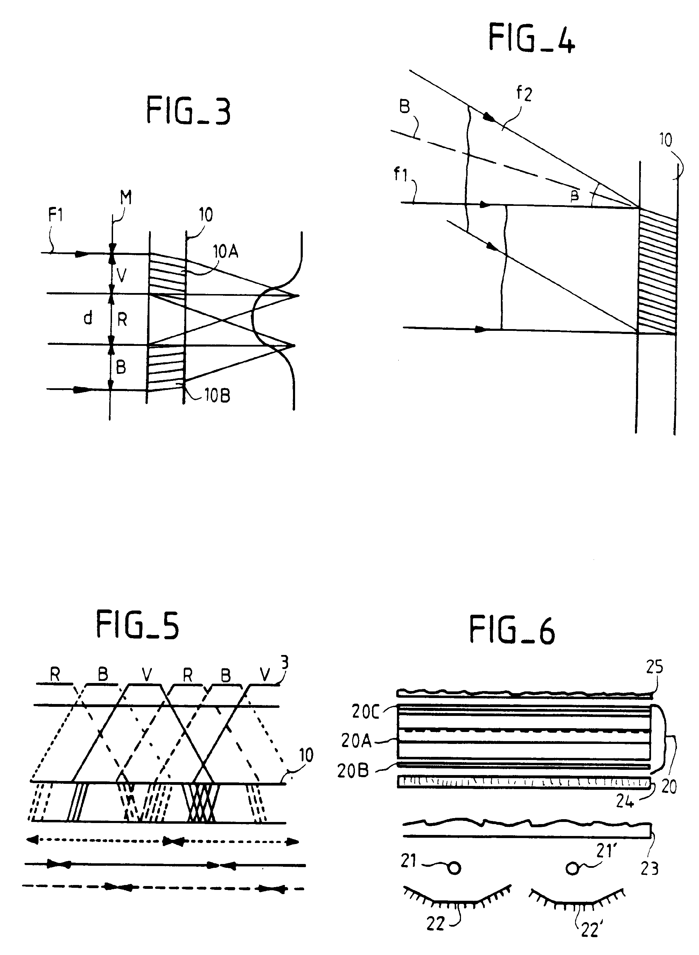

En général, il est difficile d'obtenir une bonne sensibilisation du matériau holographique aux composantes primaires rouge, verte et bleue. En effet, la couleur rouge est particulièrement peu actinique et le matériau utilisé n'est en général sensible qu'à la couleur bleue, voire à l'ultra-violet. De plus la sensibilisation aux plus fortes longueurs d'onde se fait par incorporation de colorant qu'il faut détruire après enregistrement, ce qui peut introduire des procédés chimiques complexes. Pour remédier à ces inconvénients, l'on réalise, conformément à la présente invention, les lentilles holographiques en utilisant le procédé illustré par les figures 3 à 5. Il est alors préférable de décomposer chaque lentille correspondant à une couleur en au moins deux réseaux. Comme représenté sur la figure 3, cette décomposition est justifiée par la très faible résolution demandée à chaque lentille qui doit focaliser la lumière sur un pixel de dimension d. Dans ce cas on obtient un bon compromis entre la résolution de la lentille et le nombre de masques utilisé. Comme représenté sur la figure 4, chacun de ces deux faisceaux lumineux f1 et f2 dont la bissectrice B correspond à l'orientation des strates à enregistrer et dont l'angle $\beta$ d'intersection entre les faisceaux f1 et f2 est choisi de manière à enregistrer le pas p désiré. En effet, dans un hologramme, on à la relation suivante :

$$\frac{1}{p} = \frac{\beta}{\lambda} = cste$$

où p représente le pas des strates, $\beta$ l'angle d'interférence entre les deux faisceaux f1 et f2 et $\lambda$ la longueur d'ondes du faisceau lumineux utilisé.

Pour réaliser l'hologramme souhaité, on utilise un masque adéquat. Ainsi, pour enregistrer la couleur rouge, on utilise le masque M qui occulte la partie rouge correspondant aux pixels de couleur rouge sur l'écran à cristaux liquides. On réalise ainsi le réseau de lentilles holographiques souhaité par au moins six superpositions de réseaux, comme représenté sur la figure 5. Dans cette figure, la référence 3 concerne un écran à cristaux liquides constitué de triplets rouge (R), bleu (B), vert (V). La lumière est filtrée, dans ce cas, à travers un hologramme 10 dans lequel les éléments en pointillés représentent les strates des filtres bleus, les éléments en traits continus représentent les strates des filtres verts, et les éléments en tiretés représentent les strates des filtres rouges. On obtient donc une structure sensiblement du type de celle représentée en 10 avec des pas de strates différents en fonction des couleurs.

On décrira maintenant avec référence à la figure 6, un autre mode d'utilisation d'un système optique conforme à la présente invention. En effet, le système optique de la présente invention peut être utilisé dans un dispositif à vision directe. Dans ce cas, le dispositif comporte des sources lumineuses 21, 21' associées à des réflecteurs 22, 22', un élément de collimation 23 permettant d'obtenir un faisceau parallèle faiblement collimaté, conformément à la présente invention, un réseau de lentilles holographiques 24 réalisé de la manière décrite ci-dessus, un écran à cristaux liquides 20 constitué de manière connue d'un polariseur 20b, de l'écran proprement dit 20a et d'un analyseur 20c. Eventuellement, un diffuseur 25 peut être associé à ce dispositif. Ce diffuseur peut être du type aléatoire (verre dépoli) ou sous forme d'un réseau de lentilles cylindriques de très faible pas ou de deux tels réseaux croisés offrant un diagramme de diffusions horizontale et verticale adapté au besoin.

Dans ce dispositif, le réseau de lentilles holographiques est réalisé de la manière décrite ci-dessus. Le faisceau collimaté est donc focalisé sur les pixels de couleurs associés par trois rangées de lentilles holographiques superposées. Dans ce cas, la distance entre l'hologramme et le modulateur électro-optique constitué par un écran à cristaux liquides n'est pas une caractéristique importante.

**Revendications**

1. Système optique de reproduction d'images vidéo en couleurs comportant une source d'éclairement (1), un modulateur électro-optique (3) constitué de pixels associés respectivement aux couleurs rouge, verte, bleue et des moyens optiques de collimation (2) pour éclairer la totalité du modulateur, dans lequel un ensemble de lentilles holographiques (6), sélectives en longueurs d'onde, permet de focaliser la lumière de chaque composante rouge, verte ou bleue sur les pixels associés du modulateur, caractérisé en ce que l'ensemble des lentilles holographiques est constitué de trois lentilles (10) holographiques superposées réalisées dans une couche épaisse d'un matériau sensible à une seule couleur, chaque lentille (10) étant décomposée en au moins deux réseaux holographiques (10a, 10b).

2. Système optique selon la revendication 1, caractérisé en ce que chaque réseau holographiques est enregistré par interférence de deux faisceaux lumineux (F1, F2) dont la bissectrice (B) est l'orientation des strates à enregistrer et dont l'angle d'intersection (β) est choisi de manière à enregistrer le pas désiré.

3. Système optique selon l'une quelconque des revendications 1 et 2, caractérisé en ce que le matériau photosensible est choisi parmi la gélatine bi-chromatée ou les copolymères d'esther méthacryliques se liant à des cétones aromatiques sous l'effet d'irradiation.

4. Système optique selon l'une quelconque des revendications 1 à 3, caractérisé en ce que le modulateur électro-optique (3) est constitué par un écran à cristaux liquides.

5. Système optique selon l'une quelconque des revendications 1 à 4, caractérisé en ce qu'il comporte de plus un diffuseur (25) positionné en aval du modulateur électro-optique.

6. Dispositif de projection d'images, caractérisé en ce qu'il comporte un système optique selon l'une quelconque des revendications 1 à 5, associé à une lentille de champ, un objectif et un écran.

7. Dispositif de projection d'images selon la revendication 6, caractérisé en ce que la distance focale des lentilles holographiques est égale à : fo = d/α où d représente la taille d'un pixel et α l'angle de divergence du faisceau collimaté.

**Patentansprüche**

1. Optisches System zur Wiedergabe von Videobildern in Farbe, mit einer Beleuchtungsquelle (1), einem elektrooptischen Modulator (3), der den Farben Rot, Grün bzw. Blau zugeordnete Pixel enthält, sowie optischen Kollimationsmitteln (2), um den gesamten Modulator zu beleuchten, wobei in dem System eine Gruppe von wellenlängenselektiven, holographischen Linsen (6) das Fokussieren des Lichtes der roten, grünen oder blauen Bestandteile auf die entsprechenden Pixel des Modulators ermöglicht, dadurch gekennzeichnet, daß die Gruppe der holographischen Linsen durch drei übereinanderliegende holographische Linsen (10) gebildet ist, die in einer dicken Schicht eines für eine einzige Farbe empfindlichen Materials gebildet sind, wobei jede Linse (10) unterteilt ist in wenigstens zwei holographische Gitter (10a, 10b).

2. Optisches System nach Anspruch 1, dadurch gekennzeichnet, daß jedes holographische Gitter durch Interferenz von zwei Lichtbündeln (F1, F2) eingeschrieben ist, deren Winkelhalbierende (B) die Ausrichtung der einzuschreibenden Furchen ist und deren Schnittwinkel (β) so gewählt ist, daß die gewünschte Teilung eingeschrieben wird.

3. Optisches System nach einem der Ansprüche 1 und 2, dadurch gekennzeichnet, daß das photosensible Material ausgewählt ist aus dichromathaltiger Gelatine oder Methacrylsäureester-Copolymeren, die sich unter der Wirkung von Bestrahlung mit aromatischen Ketonen verbinden.

4. Optisches System nach einem der Ansprüche 1 bis 3, dadurch gekennzeichnet, daß der elektrooptische Modulator (3) durch einen Flüssigkristallschirm gebildet ist.

5. Optisches System nach einem der Ansprüche 1 bis 4, dadurch gekennzeichnet, daß es außerdem einen nach dem elektrooptischen Modulator angeordneten Diffusor (25) enthält.

6. Bildprojektionsvorrichtung, dadurch gekennzeichnet, daß sie ein optisches System nach einem der Ansprüche 1 bis 5 in Verbindung mit einer Objektivlinse, einem Objektiv und einem Bildschirm enthält.

7. Bildprojektionsvorrichtung nach Anspruch 6, dadurch gekennzeichnet, daß für die Brennweite der holographischen Linsen gilt: fo = d/α, wobei d die Größe eines Pixels und α den Divergenzwinkel des kollimierten Bündels darstellt.

**Claims**

1. Optical system for reproducing colour video images, including a source of illumination (1), an electro-optical modulator (3) consisting of pixels associated respectively with the colours red, green and blue and optical collimation means (2) for illuminating the whole of the modulator in which a set of wavelength-selective holographic lenses (6) makes it possible to focus the light of each red, green or blue component onto the associated pixels of the modulator, characterized in that the set of holographic lenses consists of three superimposed holographic lenses (10) produced in a thick film of a material sensitive to a single colour, each lens (10) being broken down into at least two holographic gratings (10a, 10b).

2. Optical system according to Claim 1, characterized in that each holographic grating is recorded by interference of two light beams (F1, F2) the bisector (B) of which is the orientation of the strata to be recorded and the angle of intersection (β) of which is chosen in such a way as to record the desired pitch.

3. Optical system according to either of Claims 1 or 2, characterized in that the photosensitive material is chosen from among bichromated gelatine or the methacrylic ester copolymers binding to aromatic ketones by the effect of irradiation.

4. Optical system according to any one of Claims 1 to 3, characterized in that the electro-optical modulator (3) consists of a liquid-crystal screen.

5. Optical system according to any one of Claims 1 to 4, characterized in that it additionally includes a diffuser (25) positioned downstream from the electro-optical modulator.

6. Image projection device, characterized in that it includes an optical system according to any one of Claims 1 to 5, associated with a field lens, an objective lens and a screen.

7. Image projection device according to Claim 6, characterized in that the focal length of the holographic lenses is equal to: fo = d/α in which d represents the size of one pixel and α the divergence angle of the collimated beam.

# FIG_1

# FIG_2

# FIG_3

# FIG_4

# FIG_5

# FIG_6